# EUROPÄISCHE PATENTSCHRIFT

(11) **EP 1 075 372 B1**
(45) Veröffentlichungstag und Bekanntmachung des Hinweises auf die Patenterteilung: **30.10.2002**
(21) Anmeldenummer: 99910256.9
(22) Anmeldetag: 23.02.1999
(51) Int. Cl.: B29C 37/00, B29C 70/70

(54) **VERFAHREN ZUR OBERFLÄCHENBESCHICHTUNG EINES INNENAUSBAUTEILES**
METHOD FOR SURFACE-COATING AN INTERIOR FITTING
PROCEDE POUR REVETIR LA SURFACE D'UN ELEMENT D'AMENAGEMENT INTERIEUR

(30) Priorität: 29.04.1998 DE 19819133
(43) Veröffentlichungstag der Anmeldung: 14.02.2001
(73) Patentinhaber: Erwin Behr GmbH & Co. KG, 73240 Wendlingen (DE)
(72) Erfinder: BERG, Matthias, D-72669 Unterensingen (DE); HEMPEL, Thomas, D-71711 Steinheim (DE); KUPFERER, Ralf, D-70569 Stuttgart (DE)
(74) Vertreter: Karrais, Martin
(86) Internationale Anmeldenummer: EP9901143
(87) Internationale Veröffentlichungsnummer: WO99055511

(56) Entgegenhaltungen:
- DE-C- 4 320 893
- US-A- 4 647 274

## Beschreibung

Die vorliegende Erfindung betrifft ein Verfahren zur Oberflächenbeschichtung eines Innenausbauteiles für Fahrzeuge, z.B. eines Holzformteiles, mit einer Lack- oder Harzschicht, bei dem man das zu beschichtende Innenausbauteil in einen Hohlraum eines Formwerkzeuges einlegt, dessen Innenwand von dem Innenausbauteil im Bereich der zu beschichtenden Oberfläche des Innenausbauteiles, insbesondere im Bereich einer Sichtseite des Innenausbauteiles, einen definierten Abstand aufweist und dadurch zwischen der Innenwand und der zu beschichtenden Oberfläche einen sich über die gesamte zu beschichtende Oberfläche erstreckenden Spaltraum mit im wesentlichen konstanter Dicke ausbildet, und bei dem man in den Spaltraum ein flüssiges Oberflächenbeschichtungsmaterial einfüllt und dort aushärtet.

Derartige Innenausbauteile mit einer lackierten Oberfläche werden beispielsweise zur Innenausstattung von Kraftfahrzeugen verwendet. Hierbei kommen insbesondere Holzformteile zum Einsatz, die als massive Teile oder als Furnierteile ausgebildet sein können, wobei letztere meist auf ihrer Rückseite mit einem Verstärkungselement beispielsweise aus Kunststoff versehen werden. Auf die Sichtseite der Innenausbauteile wird eine durchsichtige Lack- oder Harzschicht aufgebracht, so daß eine meist glänzende und strapazierfähige Oberfläche entsteht und im Falle von Holzformteilen bei einer transparenten Oberflächenbeschichtung die Struktur des Holzes nicht nur sichtbar bleibt, sondern zusätzlich hervorgehoben wird. Hierzu wird das Holzformteil üblicherweise mit einer ca. 0,5 mm bis etwa 0,8 mm dicken Lackschicht versehen, denn dies hat eine optisch ansprechende "Tiefenwirkung" zur Folge.

Bei herkömmlichen Herstellungsverfahren werden die als Lacke oder Harze zum Einsatz kommenden Oberflächenbeschichtungsmaterialien auf die zu beschichtenden Oberflächen aufgespritzt oder auflackiert. Dabei sind im allgemeinen mehrere Lagen erforderlich, um einerseits die gewünschte Versiegelung, andererseits auch eine möglichst glänzende Oberfläche zu erhalten. Damit die Oberflachen einschlußfrei und völlig gleichmäßig ausfallen, ist es notwendig, erhöhte Vorsichtsmaßnahmen zu ergreifen. Außerdem erfordert das Aufsprühen oder Auflackieren in aller Regel eine Nachbehandlung. So ist es beispielsweise zur Erzielung der eingangs erwähnten Tiefenwirkung erforderlich, Lackschichten in mehreren Stufen nacheinander aufzubringen, bis eine Schichtdicke von ca. 0,8 mm erzielt wird. Anschließend wird die Lackschicht durch Schleifen und Polieren wieder auf eine Schichtdicke von ca. 0,5 mm reduziert, die dann die gewünschten optischen Anforderungen erfüllt.

Statt die Oberflächenbeschichtungsmaterialien auf das Innenausbauteil aufzusprühen oder aufzulackieren, wurde in der DE 43 20 893 C1 bereits vorgeschlagen, das Innenausbauteil in ein Formwerkzeug einzulegen, dessen Innenwand von dem Innenausbauteil im Bereich der zu beschichtenden Oberfläche des Innenausbauteiles einen geringen Abstand aufweist und dadurch zwischen der Innenwand und der Oberfläche einen sich über die gesamte zu beschichtende Oberfläche erstreckenden Spaltraum mit im wesentlichen konstanter Dicke ausbildet. Anschließend wird bei dem bekannten Verfahren das flüssige Oberflächenbeschichtungsmaterial in den Spaltraum eingefüllt und dann dort ausgehärtet. Um sicherzustellen, daß in die Oberflächenschicht keinerlei Gasblasen eingebettet werden, wird bei dem aus der DE 43 20 893 C2 bekannten Verfahren der Spaltraum evakuiert und das flüssige Oberflächenbeschichtungsmaterial wird während des Evakuierens oder danach in den Spaltraum eingefüllt.

Aus der US-Patentschrift 4 647 274 ist es bekannt, ein Verfahren gemäß dem Oberbegriff des Anspruchs 1 und ein Innenausbauteil für Fahrzeuge in einem Formwerkzeug dadurch zu beschichten, daß man im Bereich der zu beschichtenden Oberfläche des Innenausbauteiles ein zwei Komponenten aufweisendes, flüssiges Oberflächenbeschichtungsmaterial einfüllt, welches man im Formwerkzeug unter Druck- und Wärmebelastung aushärtet.

In vielen Fällen wird mittels der bekannten Verfahren eine befriedigende Oberflächenqualität erzielt. Es hat sich allerdings gezeigt, daß nicht in allen Fällen eine höchsten Anforderungen genügende Lackschicht hergestellt werden kann.

Aufgabe der vorliegenden Erfindung ist es, das gattungsgemäße Verfahren derart weiterzubilden, daß möglichst ohne zusätzliche Nachbearbeitung die Qualität der Oberflächenbeschichtung verbessert wird.

Diese Aufgabe wird bei einem Verfahren der eingangs beschriebenen Art erfindungsgemäß dadurch gelöst, daß man nach dem Befüllen des Spaltraumes das Formwerkzeug vom Misch- und Zuführaggregat trennt und das Oberflächenbeschichtungsmaterial im Spaltraum im wesentlichen unter Atmosphärendruck aushärtet.

Bei dem erfindungsgemäßen Verfahren kommt als Oberflächenbeschichtungsmaterial ein Gemisch aus mindestens zwei Komponenten zum Einsatz, die erst unmittelbar vor dem Befüllen des Spaltraumes miteinander vermischt werden. Das Oberflächenbeschichtungsmaterial wird mittels des Zuführaggregates in den Spaltraum eingefüllt, und anschließend wird das Misch- und Zuführaggregat vom Formwerkzeug getrennt. Das Aushärten des Oberflächenbeschichtungsmaterials im Spaltraum erfolgt dann im wesentlichen unter Atmosphärendruck. Es hat sich überraschenderweise gezeigt, daß das Aushärten unter atmosphärischem Druck eine besonders gute Qualität der Oberflächenbeschichtung zur Folge hat.

Das Befüllen des Spaltraumes mit Oberflächenbeschichtungsmaterial erfolgt in vorteilhafter Weise besonders gleichmäßig in sämtlichen Bereichen des Spaltraumes, wenn man das Oberflächenbeschichtungsmaterial mittels Überdruck oder Unterdruck in den Spaltraum einfüllt. Es kann vorgesehen sein, daß man das Oberflächenbeschichtungsmaterial in den Spaltraum einpreßt. Alternativ kann der Spaltraum vor oder während dem Befüllen zumindest teilweise evakuiert werden. Die Ausübung eines Überdruckes oder Unterdruckes erfolgt bei dem erfindungsgemäßen Verfahren allerdings nur während des Befüllens des Spaltraumes, während das Aushärten des flüssigen Oberflächenbeschichtungsmateriales unter atmosphärischem Druck erfolgt.

Besonders kostengünstig läßt sich das Verfahren durchführen, wenn man die der zu beschichtenden Oberfläche des Innenausbauteiles zugewandte Innenwand des Formwerkzeuges mit einer optischen Oberflächengüte ausstattet, beispielsweise hochglanzpoliert. Eine weitere Oberflächenbearbeitung des mit einer Lack- oder Harzschicht versehenen Innenbauteiles kann dadurch entfallen.

Günstig ist es, wenn man die der zu beschichtenden Oberfläche des Innenausbauteiles zugewandte Innenwand des Formwerkzeuges aus Edelstahl, nichtrostendem, säurebeständigem, härtbarem Stahl, Silikon, Keramik oder Aluminium ausbildet. Derartige Materialien zeigen eine hohe Resistenz gegen die meist aggressiven Lacke oder Harze, die zur Oberflächenbeschichtung vorgesehen sein können. Da das Aushärten des flüssigen Oberflächenbeschichtungsmaterials unter atmosphärischem Druck erfolgt und nicht unter Überdruck, kann zur Ausgestaltung der Innenwand auch sprödes Keramikmaterial zum Einsatz kommen.

Bei einer besonders bevorzugten Ausführungsform des erfindungsgemäßen Verfahrens ist vorgesehen, daß man die der zu beschichtenden Oberfläche des Innenausbauteiles zugewandte Innenwand des Formwerkzeuges hartverchromt, da dadurch eine besonders gute Resistenz gegen Lacke und Harze erzielt werden kann.

Von Vorteil ist es, wenn man die mindestens zwei Komponenten des flüssigen Oberflächenbeschichtungsmaterials unmittelbar vor dem Befüllen des Spaltraumes homogen miteinander vermischt und dem Formwerkzeug mit ungefähr konstanter Strömungsgeschwindigkeit zuführt. Durch das möglichst gleichmäßige Zuführen des Gemisches des Oberflächenbeschichtungsmaterials wird die Bildung von Gasblasen vermindert, so daß ohne Nachbearbeitung eine besonders gute Oberflächenbeschichtung erzielt werden kann.

Während des Aushärtens unter atmosphärischem Druck können eventuell vorliegende Gasblasen bis in einen den Spaltraum mit dem Anschluß des Formwerkzeuges an das Misch- und Zuführaggregat verbindenden Befüllkanal oder in einen Entlüftungkanal oder Steiger aufsteigen, so daß nach dem Aushärten die Oberflächenbeschichtung nicht durch vorliegende Gasblasen beeinträchtigt wird. Besonders vorteilhaft ist es allerdings, wenn man das Oberflächenbeschichtungsmaterial dem Spaltraum praktisch blasenfrei zuührt, denn dadurch wird sichergestellt, daß eine besonders homogene und unterbrechungsfreie Qualität der Oberflächenbeschichtung erzielt wird.

Als flüssiges Oberflächenbeschichtungsmaterial können bevorzugt Kunstharze auf Polyurethan-, Polyester-, Acryl- oder Epoxybasis verwendet werden.

Die Härtung des eingefüllten, flüssigen Oberflächenbeschichtungsmaterials kann dadurch unterstützt werden, daß man dem flüssigen Oberflächenbeschichtungsmaterial UV-strahlungsempfindliche Sensibilisatoren beimischt und man während des Aushärtens das flüssige Oberflächenbeschichtungsmaterial mit UV-Strahlung beaufschlagt. Die UV-Strahlung kann hierbei über Lichtleiter in das Formwerkzeug eingekoppelt werden. Es kann allerdings auch vorgesehen sein, daß man eine strahlungsdurchlässige Glas- oder Kunststofform verwendet. Eine Reduzierung der Aushärtezeiten kann auch dadurch erzielt werden, daß man das Formwerkzeug während des Aushärtens thermisch beaufschlagt. Es ist auch von Vorteil, wenn man das Oberflächenbeschichtungsmaterial während des Aushärtens mit elektromagnetrischer Strahlung, insbesondere mit Mikrowellenstrahlung, beaufschlagt, um auf diese Weise in besonders kurzer Zeit das Innenausbauteil mit ausgehärteter Oberflächenbeschichtung dem Formwerkzeug entnehmen zu können.

Wie bereits erläutert, kann vorgesehen sein, daß man das beschichtete Innenausbauteil nach dem Aushärten dem Formwerkzeug entnimmt und dann ohne weitere Oberflächenbearbeitung beläßt.

Das erfindungsgemäße Verfahren kommt insbesondere zur Oberflächenbeschichtung der Sichtfläche des Innenausbauteiles zum Einsatz. Vorzugsweise ist allerdings auch vorgesehen, daß man durch entsprechende Auslegung des Formwerkzeuges auch Kantenbereiche des Innenausbauteiles mit dem Oberflächenbeschichtungsmaterial überdeckt. Außerdem kann vorgesehen sein, daß man das Innenausbauteil so innerhalb des Formwerkzeuges anordnet, daß allseitig zwischen der Oberfläche des Innenausbauteiles und der Innenwand des Formwerkzeuges ein Spaltraum ausgebildet wird. Dadurch kann eine allseitige Beschichtung des Innenausbauteiles erzielt werden. Soll nur die Sichtfläche des Innenausbauteiles beschichtet werden, so wird dieses mit seiner Rückseite flächig unmittelbar an die Innenwand des Formwerkzeuges angelegt, so daß nur in den übrigen Oberflächenbereichen ein Spaltraum zwischen der zu beschichtenden Oberfläche des Innenausbauteiles und der Innenwand des Hohlraumes angeordnet ist. Insbesondere bei der Innenverkleidung von Kraftfahrzeugen reicht es meist aus, nur die zum Innenraum zugekehrte Sichtseite des Innenausbauteiles zu beschichten, während dessen Rückseite im wesentlichen unbeschichtet bleiben kann.

Es ist auch denkbar, mittels des erfindungsgemäßen Verfahrens die Rückseite des Innenausbauteiles teilweise mit Oberflächenbeschichtungsmaterial zu beschichten.

Wie bereits beschrieben, wird das Oberflächenbeschichtungsmaterial mittels des Misch- und Zuführaggregates in flüssigem Zustand in den Spaltraum eingefüllt. Das Oberflächenbeschichtungsmaterial umfaßt mindestens zwei Komponenten. Hierbei kann vorgesehen sein, daß eine der Komponenten zumindest im Ausgangszustand von fester Konsistenz ist, beispielsweise in Form eines Granulates oder Pulvers. So können beispielsweise im Falle eines beschleunigten Aushärtens mittels UV-Strahlung pulverförmige Sensibilisatoren als eine Komponente des Oberflächenbeschichtungsmateriales vorgesehen sein.

Die beschriebene Erfindung erstreckt sich selbstverständlich nicht nur auf das voranstehend beschriebene Verfahren, sondern auch auf Innenausbauteile, insbesondere Holzformteile, die unter Anwendung dieses Verfahrens hergestellt sind.

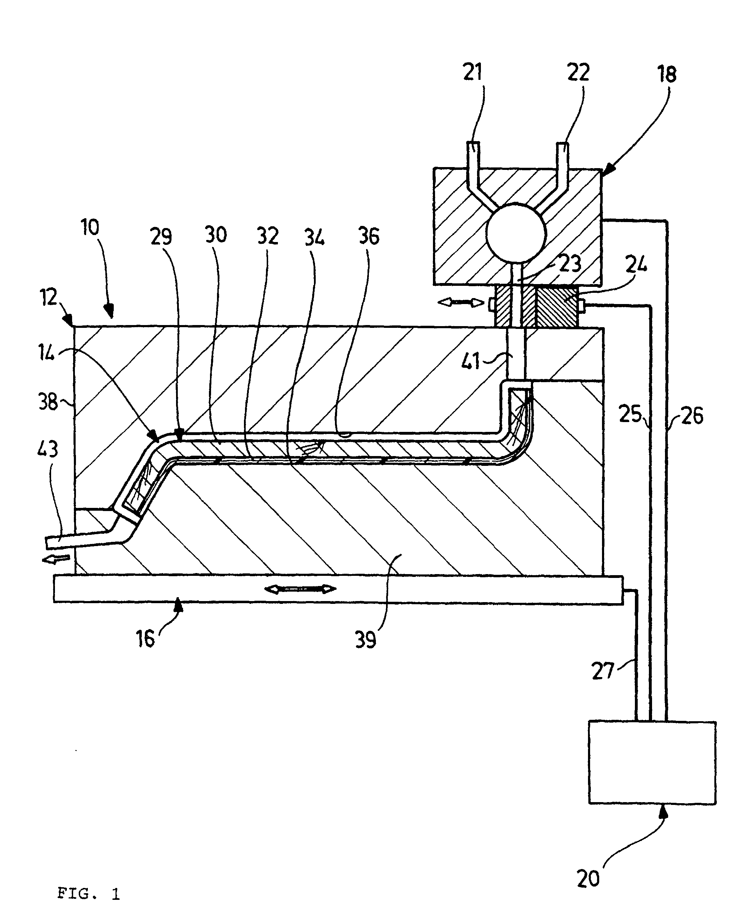

Die nachfolgende Beschreibung einer bevorzugten Ausführungsform der Erfindung dient im Zusammenhang mit der Zeichnung der näheren Erläuterung.

In der Zeichung ist schematisch eine Anlage zur Oberflächenbeschichtung eines Holzformteiles dargestellt. Die Anlage ist in der Zeichnung mit den Bezugszeichen 10 belegt und umfaßt im wesentlichen ein zweiteilig ausgestaltetes Formwerkzeug 12, das einen allseits geschlossenen Hohlraum 14 ausbildet, eine Transportvorrichtung 16, auf der das Formwerkzeug 12 bewegt werden kann, sowie ein Misch- und Zuführaggregat 18 und eine Steuereinheit 20.

Im dargestellten Ausführungsbeispiel umfaßt das Mischund Zuführaggregat zwei Füllanschlüsse 21 und 22 sowie einen Auslaß 23, der über ein elektrisch steuerbares Magnetventil 24 geöffnet und geschlossen werden kann. Die Ansteuerung des Magnetventiles 24 erfolgt ebenso wie die Ansteuerung des Misch- und Zuführaggregates 18 und die Ansteuerung der Transportvorrichtung 16 mittels der Steuereinheit 20, die über Steuerleitungen 25, 26 und 27 mit dem Magnetventil 24, dem Misch- und Zuführaggregat 18 bzw. der Transportvorrichtung 16 elektrisch gekoppelt ist.

In den Hohlraum 14 des Formwerkzeuges 12 ist ein Innenausbauteil 29 eingelegt in Form eines Holzfurnierteiles 30 mit rückseitig angeordnetem Verstärkungselement 32.

Die Form des Hohlraumes 14 ist so gewählt, daß sie an die Form des Innenausbauteiles 29 angepaßt ist. Mit seiner Rückseite liegt das Innenausbauteil 29 flächig an der Innenwand 34 des Hohlraumes 14 an, während im Bereich der zu beschichtenden Sichtseite des Innenausbauteiles 29 zwischen der Innenwand 34 des Hohlraumes 14 und der Oberfläche des Innenausbauteiles 29 ein Spaltraum 36 ausgebildet ist. Die Dicke des Spaltraumes kann beispielsweise zwischen 0,1 mm und 1,5 mm liegen, je nach gewünschter Dicke der Oberflächenbeschichtung; vorzugsweise beträgt die Dicke des Spaltraumes ca. 0,5 mm.

Das Formwerkzeug 12 ist zweiteilig ausgestaltet und umfaßt eine Oberform 38 und eine Unterform 39, so daß durch Trennen der beiden Formen der Hohlraum 14 zum Einlegen und Entnehmen des Innenausbauteiles 29 zugänglich ist. Der Hohlraum 14 steht über einen Einfüllkanal 41 und das Magnetventil 24 mit dem Misch- und Zuführaggregat 18 in Strömungsverbindung. Zusätzlich ist ein Sauganschluß 43 vorgesehen, über den der Hohlraum 14 zur Erzeugung eines Vakuums mit einer in der Zeichnung nicht dargestellten Pumpe verbunden werden kann.

Zur Beschichtung eines Innenausbauteiles 29 wird dieses in den Hohlraum 14 eingelegt und anschließend wird der Hohlraum 14 über den Sauganschluß 43 evakuiert. Zwei Komponenten eines flüssigen Oberflächenbeschichtungsmaterials werden über die Füllanschlüsse 21 und 22 dem Misch- und Zuführaggregat 18 zugeführt. In diesem Aggregat werden die beiden Komponenten homogen miteinander vermischt und über das Magnetventil 24 und den Einfüllkanal 41 in den Hohlraum 14 eingefüllt. Das Einfüllen kann hierbei unter erhöhtem Druck erfolgen, beispielsweise mit Hilfe einer in der Zeichnung nicht dargestellten, an sich bekannten Förderpumpe des Misch - und Zuführaggregates 18. Die Zuführung des flüssigen Oberflächenbeschichtungsmaterials in den Hohlraum 14 erfolgt solange, bis dieses den Hohlraum 14 vollständig und homogen ausfüllt. Anschließend wird der Auslaß 23 des Misch- und Zuführaggregates 18 mittels des Magnetventiles 24 geschlossen und das Formwerkzeug 12 wird mittels der Transportvorrichtung 16 physisch vom Misch- und Dosieraggregat 18 getrennt. Dadurch wird sichergestellt, daß das Aushärten des Oberflächenbeschichtungsmaterials unter atmosphärischem Druck erfolgt und nicht etwa unter einem von der Förderpumpe des Misch- und Zuführaggregates 18 ausgeübten Überdruck. Außerdem kann dadurch nach dem Aushärten das Innenausbauteil 29 durch Trennen der beiden Formen 38 und 39 dem Hohlraum 14 entnommen werden, ohne daß dabei eine Behinderung durch das Misch- und Zuführaggregat 18 erfolgt.

Das Aushärten des Oberflächenbeschichtungsmaterials kann durch Erwärmen des Formwerkzeuges 12 beschleunigt werden sowie durch Bestrahlung des Obeflächenbeschichtungsmaterials mit UV-Strahlung, die über einen in der Zeichnung nicht dargestellten Lichtleiter in den Hohlraum 14 eingekoppelt werden kann.

Wie bereits beschrieben, wird das Formwerkzeug 12 nach dem Aushärten des Oberflächenbeschichtungsmateriales geöffnet, so daß das oberflächenbeschichtete Innenausbauteil 29 entnommen werden kann. Die Entnahme kann durch in der Zeichnung nicht dargestellte Auswerfer unterstützt werden. Eine weitere Bearbeitung der Oberfläche des Innenausbauteiles ist anschließend nicht erforderlich, durch entsprechende Oberflächengüte der Innenwand 34 des Formwerkzeuges 12 wird vielmehr sichergestellt, daß die Sichtseite des Innenausbauteiles 29 eine hochglänzende Oberfläche aufweist, wobei durch die Dicke der hochtransparenten Oberflächenschicht eine Tiefenwirkung zustandekommt. Als Oberflächenbeschichtungsmaterial kommt vorzugsweise ein Kunstharz auf Polyesterbasis zum Einsatz.

Nachdem das beschichtete Innenausbauteil dem Formwerkzeug 12 entnommen wurde, kann in dieses ein weiteres zu beschichtendes Innenausbauteil eingelegt und das Formwerkzeug 12 anschließend wieder geschlossen werden. Mittels der Transportvorrichtung 16 läßt sich dann das Formwerkzeug 12 wieder derart positionieren, daß sein Einfüllkanal 41 mit dem Misch- und Zuführaggregat 18 in Strömungsverbindung steht, so daß wie voranstehend beschrieben, flüssiges Oberflächenbeschichtungsmaterial in den Hohlraum 14 eingefüllt werden kann.

## Patentansprüche

1. Verfahren zur Oberflächenbeschichtung eines Innenausbauteiles (29) für Fahrzeuge, z. B. eines Holzformteiles, mit einer Lack- oder Harzschicht, bei dem man das zu beschichtende Innenausbauteil (29) in einen Hohlraum eines Formwerkzeuges (12) einlegt, dessen Innenwand (34) von dem Innenausbauteil (29) im Bereich der zu beschichtenden Oberfläche des Innenausbauteiles (29), insbesondere im Bereich einer Sichtseite des Innenausbauteiles (29), einen definierten Abstand aufweist und dadurch zwischen der Innenwand (34) und der zu beschichtenden Oberfläche einen sich über die gesamte zu beschichtende Oberfläche erstreckenden Spaltraum (36) mit im wesentlichen konstanter Dikke ausbildet, und bei dem man in den Spaltraum (36) ein flüssiges Oberflächenbeschichtungsmaterial einfüllt und dort aushärtet, wobei das Oberflächenbeschichtungsmaterial mindestens zwei Komponenten aufweist, die man unmittelbar vor dem Befüllen des Spaltraumes (36) in einem Misch- und Zuführaggregat (18) miteinander vermischt und dem Spaltraum (36) zuführt,
**dadurch gekennzeichnet, daß** man nach dem Befüllen des Spaltraumes (36) das Formwerkzeug (12) vom Misch- und Zuführaggregat (18) trennt und das Oberflächenbeschichtungsmaterial im Spaltraum (36) im wesentlichen unter Atmosphärendruck aushärtet.

2. Verfahren nach Anspruch 1, **dadurch gekennzeichnet, daß** man das Oberflächenbeschichtungsmaterial mittels Überdruck oder Unterdruck in den Spaltraum (36) einfüllt.

3. Verfahren nach Anspruch 1 oder 2, **dadurch gekennzeichnet, daß** man die der zu beschichtenden Oberfläche des Innenausbauteiles (29) zugewandte Innenwand des Formwerkzeuges (12) mit einer optischen Oberflächengüte ausstattet.

4. Verfahren nach einem der voranstehenden Ansprüche, **dadurch gekennzeichnet, daß** man die der zu beschichtenden Oberfläche des Innenausbauteiles (29) zugewandte Innenwand des Formwerkzeuges (12) aus Edelstahl, nichtrostendem, säurebeständigem, härtbarem Stahl, Silikon, Keramik oder Aluminium ausbildet.

5. Verfahren nach einem der voranstehenden Ansprüche, **dadurch gekennzeichnet, daß** man die der zu beschichtenden Oberfläche des Innenausbauteiles (29) zugewandte Innenwand des Formwerkzeuges (12) hartverchromt.

6. Verfahren nach einem der voranstehenden Ansprüche, **dadurch gekennzeichnet, daß** man die mindestens zwei Komponenten des flüssigen Oberflächenbeschichtungsmaterials unmittelbar vor dem Befüllen des Spaltraumes (36) homogen miteinander vermischt und dem Spaltraum (36) mit ungefähr konstanter Strömungsgeschwindigkeit zuführt.

7. Verfahren nach einem der voranstehenden Ansprüche, **dadurch gekennzeichnet, daß** man das Oberflächenbeschichtungsmaterial dem Spaltraum (36) praktisch blasenfrei zuführt.

8. Verfahren nach einem der voranstehenden Ansprüche, **dadurch gekennzeichnet, daß** man als flüssiges Oberflächenbeschichtungsmaterial ein Kunstharz auf Polyurethan-, Polyester-, Acryl- oder Epoxybasis verwendet.

9. Verfahren nach einem der voranstehenden Ansprüche, **dadurch gekennzeichnet, daß** das flüssige Oberflächenbeschichtungsmaterial UV-strahlungsempfindliche Sensibilisatoren aufweist und daß man das flüssige Oberflächenbeschichtungsmaterial während des Aushärtens mit UV-Strahlung beaufschlagt.

10. Verfahren nach einem der voranstehenden Ansprüche, **dadurch gekennzeichnet, daß** man das Formwerkzeug (12) während des Aushärtens des flüssigen Oberflächenbeschichtungsmaterials thermisch beaufschlagt.

11. Verfahren nach einem der voranstehenden Ansprüche, **dadurch gekennzeichnet, daß** man das flüssige Oberflächenbeschichtungsmaterial während des Aushärtens mit einer elektromagnetischen Strahlung, insbesondere Mikrowellenstrahlung beaufschlagt.

12. Verfahren nach einem der voranstehenden Ansprüche, **dadurch gekennzeichnet, daß** man das beschichtete Innenausbauteil (29) nach dem Aushärten des Oberflächenbeschichtungsmaterials dem Formwerkzeug (12) entnimmt und ohne weitere Oberflächenbearbeitung der Sichtfläche beläßt.

13. Verfahren nach einem der voranstehenden Ansprüche, **dadurch gekennzeichnet, daß** man durch entsprechende Auslegung des Formwerkzeuges (12) auch Kantenbereiche des Innenausbauteiles (29) mit Oberflächenbeschichtungsmaterial überdeckt.

14. Verfahren nach einem der voranstehenden Ansprüche, **dadurch gekennzeichnet, daß** man die Rückseite des Innenausbauteiles (29) zumindest teilweise mit Oberflächenbeschichtungsmaterial bedeckt.

15. Verfahren nach einem der voranstehenden Ansprüche, **dadurch gekennzeichnet, daß** man als eine der Komponenten des Oberflächenbeschichtungsmaterials ein im Ausgangszustand eine feste Konsistenz aufweisendes Material verwendet.

## Claims

1. A method for surface coating an interior fitting (29) for vehicles, e.g. a wooden structural part, with a layer of paint or resin, with which the interior fitting (29) to be coated is inserted into a cavity of a mould (12), the interior wall (34) of which is a defined distance from the interior fitting (29) in the region of the surface of the interior fitting (29) to be coated, in particular in the region of a visible side of the interior fitting (29) and thereby between the interior wall (34) and the surface to be coated forms a gap (36) extending over the entire surface to be coated and having a substantially constant thickness, and with which a liquid surface coating medium is filled into the gap (36) and is hardened there, whereby the surface coating material comprises at least two constituents which directly prior to the filling of the gap (36) are mixed with one another in a mixing and feed unit (18) and are supplied to the gap (36),
**characterised in that** after the gap (36) has been filled the mould (12) is separated from the mixing and feed unit (18) and the surface coating material in the gap (36) is hardened substantially at atmospheric pressure.

2. A method according to Claim 1,
**characterised in that** the surface coating material is poured into the gap (36) by means of superpressure or underpressure.

3. A method according to Claim 1 or 2,
**characterised in that** the interior wall of the mould (12) close to the surface to be coated of the interior fitting (29) is equipped with an optical surface quality.

4. A method according to one of the preceding Claims,
**characterised in that** the interior wall of the mould (12) close to the surface to be coated of the interior fitting (29) is formed from high-quality steel, stainless, acid-proof, heat-treatable steel, silicon, ceramics or aluminium.

5. A method according to one of the preceding Claims,
**characterised in that** the interior wall of the mould (12) close to the surface of the interior fitting (29) to be coated is hard chromium plated.

6. A method according to one of the preceding Claims,
**characterised in that** the at least two constituents of the liquid surface coating material are homogenously mixed with one another directly prior to filling the gap (36) and are supplied to the gap (36) at roughly constant flow velocity.

7. A method according to one of the preceding Claims,
**characterised in that** the surface coating material is supplied to the gap (36) virtually free from bubbles.

8. A method according to one of the preceding Claims,
**characterised in that** an artificial resin on a polyurethane, polyester, acrylic or epoxy base is used as the liquid surface coating material.

9. A method according to one of the preceding Claims,
**characterised in that** the liquid surface coating material has UV radiation-sensitive sensitisers **and in that** the liquid surface coating material is bombarded with UV radiation during the hardening operation.

10. A method according to one of the preceding Claims,
**characterised in that** the mould (12) is heat-treated during the hardening of the liquid surface coating material.

11. A method according to one of the preceding Claims,
**characterised in that** the liquid surface coating material is bombarded with electromagnetic radiation, in particular microwave radiation, during hardening.

12. A method according to one of the preceding Claims,
**characterised in that** the coated interior fitting (29) is removed from the mould (12) after the surface coating material has hardened and leaves without a further surface working of the visible surface.

13. A method according to one of the preceding Claims,
**characterised in that** edge regions of the interior fitting (29) are also covered with surface coating material by the appropriate construction of the mould (12).

14. A method according to one of the preceding Claims,
**characterised in that** the rear of the interior fitting (29) is covered at least partially with surface coating material.

15. A method according to one of the preceding Claims,
**characterised in that** a material having a solid consistency in the initial state is used as one of the constituents of the surface coating material.

## Revendications

1. Procédé de revêtement de la surface d'un élément d'habitacle (29) de véhicule, par exemple une pièce conformée en bois, avec une couche de laque ou de résine, dans lequel on insère l'élément d'habitacle (29) à revêtir dans l'espace creux d'un outil de moulage (12) dont la paroi intérieure (34) se trouve à une distance définie de l'élément d'habitacle (29) dans la zone de la surface à revêtir de l'élément d'habitacle (29), en particulier dans la zone d'une face visible de l'élément d'habitacle (29), et forme ainsi entre la paroi intérieure (34) et la surface à revêtir un interstice (36) qui s'étend sur toute la surface à revêtir d'une épaisseur sensiblement constante, et dans lequel on remplit avec un matériau liquide de revêtement de surface l'interstice (36) dans lequel ledit matériau durcit, le matériau de revêtement de surface comportant au moins deux composants que l'on mélange avant de remplir l'interstice (36) et que l'on amène dans l'interstice au moyen d'une unité de mélange et d'amenée (18),
**caractérisé en ce que** l'on sépare l'outil de moulage (12) de l'unité de mélange et d'amenée (18) après avoir rempli l'interstice (36), et **en ce que** le matériau de revêtement de surface durcit dans l'interstice (36) sensiblement à la pression atmosphérique.

2. Procédé selon la revendication 1, **caractérisé en ce que** l'on remplit l'interstice (36) avec le matériau de revêtement de surface par surpression ou dépression.

3. Procédé selon la revendication 1 ou 2, **caractérisé en ce que** l'on dote la paroi intérieure de l'outil de moulage (12) qui est dirigée vers la surface à revêtir l'élément d'habitacle (29) d'un produit de surface optique.

4. Procédé selon l'une des revendications précédentes, **caractérisé en ce que** la paroi intérieure de l'outil de moulage (12) qui est dirigée vers la surface à revêtir de l'élément d'habitacle (29) est réalisée en acier fin, en acier apte à la trempe, résistant aux acides et inoxydable, en silicone, en céramique ou en aluminium.

5. Procédé selon l'une des revendications précédentes, **caractérisé en ce que** la paroi intérieure de l'outil de moulage (12) qui est dirigée vers la surface à revêtir de l'élément d'habitacle (29) est chromée dur.

6. Procédé selon l'une des revendications précédentes, **caractérisé en ce que** l'on mélange lesdits au moins deux composants du matériau de revêtement de surface de façon homogène immédiatement avant de remplir l'interstice (36), et on les amène à une vitesse d'écoulement à peu près constante à l'interstice (36).

7. Procédé selon l'une des revendications précédentes, **caractérisé en ce que** l'on amène le matériau de revêtement de surface à l'interstice (36) pratiquement sans soufflure.

8. Procédé selon l'une des revendications précédentes, **caractérisé en ce que** l'on utilise comme matériau liquide de revêtement de surface une résine synthétique à base de polyuréthanne, de polyester, de résine acrylique ou de résine époxy.

9. Procédé selon l'une des revendications précédentes, **caractérisé en ce que** le matériau liquide de revêtement de surface comporte des sensibilisateurs sensibles au rayonnement UV, et **en ce que** le matériau liquide de revêtement de surface est soumis à un rayonnement UV pendant le durcissement.

10. Procédé selon l'une des revendications précédentes, **caractérisé en ce que** l'on soumet l'outil de moulage (12) à des contraintes thermiques pendant le durcissement du matériau liquide de revêtement de surface.

11. Procédé selon l'une des revendications précédentes, **caractérisé en ce que** l'on soumet le matériau liquide de revêtement de surface à un rayonnement électromagnétique, en particulier un rayonnement hyperfréquence, pendant le durcissement.

12. Procédé selon l'une des revendications précédentes, **caractérisé en ce que** l'on retire de l'outil de moulage (12) l'élément d'habitacle (29) revêtu, après durcissement du matériau de revêtement de surface, et qu'on laisse la face frontale sans traitement de surface supplémentaire.

13. Procédé selon l'une des revendications précédentes, **caractérisé en ce que** l'on recouvre également des zones de bordure de l'élément d'habitacle (29) avec un matériau de revêtement de surface en concevant l'outil de moulage (12) de façon appropriée.

14. Procédé selon l'une des revendications précédentes, **caractérisé en ce que** l'on recouvre le dos de l'élément d'habitacle (29) au moins partiellement avec un matériau de revêtement de surface.

15. Procédé selon l'une des revendications précédentes, **caractérisé en ce que** l'on utilise pour l'un des composants du matériau de revêtement de surface un matériau présentant au départ une consistance solide.
